(19) Europäisches Patentamt
European Patent Office
Office européen des brevets

(11) EP 4 216 299 A1

(12) EUROPEAN PATENT APPLICATION
published in accordance with Art. 153(4) EPC

(43) Date of publication:
**26.07.2023 Bulletin 2023/30**

(21) Application number: **21879384.2**

(22) Date of filing: **12.10.2021**

(51) International Patent Classification (IPC):
***H01M 4/13*** *(2010.01)* ***H01M 4/139*** *(2010.01)*

(52) Cooperative Patent Classification (CPC):
Y02E 60/10

(86) International application number:
**PCT/CN2021/123330**

(87) International publication number:
**WO 2022/078340 (21.04.2022 Gazette 2022/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.10.2020 CN 202011104624**

(71) Applicant: **Ningde Amperex Technology Limited**
**Ningde, Fujian 352100 (CN)**

(72) Inventors:
- **JIANG, Bing**
**Ningde, Fujian 352100 (CN)**
- **WANG, Kefei**
**Ningde, Fujian 352100 (CN)**

(74) Representative: **Icosa**
**83 avenue Denfert-Rochereau**
**75014 Paris (FR)**

# (54) POLE PIECE, ELECTROCHEMICAL APPARATUS CONTAINING SAME, AND ELECTRONIC DEVICE

(57) This application relates to the field of energy storage technologies, and in particular, to an electrode plate and an electrochemical apparatus and electronic device containing the same. The electrode plate in this application includes a current collector and a membrane, where the membrane includes a primer layer provided on a surface of the current collector and an active substance layer provided on a surface of the primer layer, and the primer layer includes a first binder and a first conductive agent; where adhesion between the membrane and the current collector is greater than or equal to 20 N/m. This application can alleviate problems in the prior art such as easy film fall-off of the electrode plate due to low adhesion of part of the active material close to the surface of the electrode current collector.

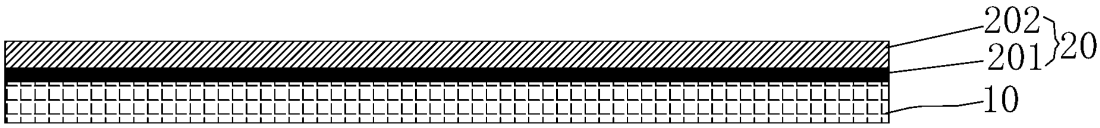


FIG. 1

EP 4 216 299 A1

## Description

This application claims priority to Chinese Patent Application No. 202011104624.X, filed with the China National Intellectual Property Administration on October 15, 2020 and entitled "ELECTRODE PLATE AND ELECTROCHEMICAL APPARATUS AND ELECTRONIC DEVICE CONTAINING SAME", which is incorporated herein by reference in its entirety.

## TECHNICAL FIELD

This application relates to the field of energy storage technologies, specifically to an electrode plate and an electrochemical apparatus and electronic device containing the same, especially a lithium-ion battery.

## BACKGROUND

With the development of technologies and the increasing demands for mobile apparatuses, demands for electrochemical apparatuses (for example, lithium-ion batteries) have increased significantly. Lithium-ion batteries with high energy density and excellent lifetime and cycling performance are one of the research directions.

As cycling proceeds, lithium ions repeatedly intercalate into and deintercalate from positive and negative electrodes of a lithium-ion battery. With intercalation and deintercalation of lithium ions, active materials swell and shrink accordingly. A negative electrode active material (such as graphite and a silicon-based material) experiences severe volume swelling and shrinkage. In the prior art, part of the active material close to the surface of the negative electrode current collector has a low adhesion. As the active material swells and shrinks during cycling, it is very likely to cause the negative electrode active material layer close to the surface of the current collector to be separated from the surface of the current collector, leading to film fall-off of the electrode plate as well as the increased internal resistance and decreased cycling performance.

In recent years, researchers have made great efforts to develop silicon-based negative electrode materials to meet the high energy density requirement. However, silicon-based negative electrode materials experience more dramatic volume changes during intercalation and deintercalation of lithium ions, resulting in more severe film fall-off on the surface of the current collectors.

In view of this, it is necessary to provide an improved electrochemical apparatus with excellent cycling performance.

## SUMMARY

This application is intended to provide an electrode plate and an electrochemical apparatus and electronic device containing the same. Such electrode plate is an electrode plate having a high adhesion, capable of resolving at least one problem existing in the related art to at least some extent.

According to a first aspect of this application, an electrode plate is provided, including a current collector and a membrane, where the membrane includes a primer layer provided on a surface of the current collector and an active substance layer provided on a surface of the primer layer, and the primer layer includes a first binder and a first conductive agent, where adhesion between the membrane and the current collector is greater than or equal to 20 N/m.

Preferably, according to some embodiments of this application, the adhesion between the membrane and the current collector is greater than or equal to 80 N/m; more preferably, according to some embodiments of this application, the adhesion between the membrane and the current collector is greater than or equal to 100 N/m; and more preferably, according to some embodiments of this application, the adhesion between the membrane and the current collector is greater than or equal to 500 N/m.

According to some embodiments of this application, thickness of the primer layer is 100 nm-2 μm; preferably, according to some embodiments of this application, the thickness of the primer layer is 100 nm-1000 nm; and more preferably, according to some embodiments of this application, the thickness of the primer layer is 100 nm-800 nm.

According to some embodiments of this application, a relationship between average particle size or average tube diameter D of the first conductive agent and thickness H of the primer layer satisfies the following: a ratio of D to H, D/H, is 0.25-1.5, and preferably 0.5-1.25.

According to some embodiments of this application, compacted density of the membrane is 1.30 g/cm$^3$-1.80 g/cm$^3$.

According to some embodiments of this application, porosity of the membrane is 20%-50%. Preferably, according to some embodiments of this application, the porosity of the membrane is 25%-40%.

According to some embodiments of this application, sheet resistance of the membrane is 3 mS2-50 mΩ. Preferably, according to some embodiments of this application, the sheet resistance of the membrane is 3 mS2-30 mΩ.

According to some embodiments of this application, a mass percentage of the first binder in the primer layer is 20%-95%.

According to some embodiments of this application, a mass percentage of the first conductive agent in the primer layer is 5%-80%.

According to some embodiments of this application, the first binder includes at least one of these functional groups: carbon-carbon double bond, carboxyl group, carbonyl group, carbon-nitrogen single bond, hydroxyl group, ester group, acyl group, and aryl group. Preferably, according to some embodiments of this application, the first binder includes at least one of these functional groups: carboxyl group, carbonyl group, carbon-nitrogen single bond, hydroxyl group, and ester group.

According to some embodiments of this application, the first binder includes at least one of SBR (styrene-butadiene rubber), PAA (polyacrylic acid), PVP (polyvinylpyrrolidone), or PAM (polyacrylamide).

According to some embodiments of this application, the first conductive agent includes at least one of conductive carbon black, Ketjen black, single-walled carbon nanotubes, or multi-walled carbon nanotubes.

According to some embodiments of this application, the active substance layer includes an active substance and a second binder.

According to some embodiments of this application, the active substance includes at least one of graphite-type material or silicon-based material.

According to some embodiments of this application, the silicon-based material includes at least one of silicon, silicon oxide, silicon-carbon composite, or silicon alloy. Preferably, according to some embodiments of this application, the silicon-based material includes at least one of pure silicon, $SiO_x$ ($0 < x \leq 2$), or silicon-carbon composite.

According to some embodiments of this application, the active substance layer further includes a second conductive agent.

According to some embodiments of this application, the active substance layer includes the active substance with a mass percentage of 80%-99%, the second binder with a mass percentage of 0.8%-20%, and the second conductive agent with a mass percentage of 0-5%.

According to some embodiments of this application, the second binder includes at least one of PAA (polyacrylic acid), PVP (polyvinylpyrrolidone), PAM (polyacrylamide) SBR (styrene-butadiene rubber), or CMC (carboxymethyl cellulose).

According to some embodiments of this application, the second conductive agent includes at least one of conductive carbon black, Ketjen black, single-walled carbon nanotubes, or multi-walled carbon nanotubes.

According to a second aspect of this application, an electrochemical apparatus is provided, including a positive electrode plate, a negative electrode plate, and a separator disposed between the positive electrode plate and the negative electrode plate, where the negative electrode plate is the foregoing electrode plate.

According to some embodiments of this application, the electrochemical apparatus includes an electrolyte, and the electrolyte includes an S=O double bond-containing compound.

According to some embodiments of this application, the S=O double bond-containing compound includes at least one of cyclic sulfate, linear sulfate, linear sulfonate, cyclic sulfonate, linear sulfite, or cyclic sulfite.

According to some embodiments of this application, the S=O double bond-containing compound includes at least one of compounds represented by formula 1:

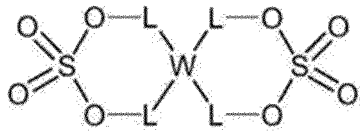 formula 1

where W is selected from

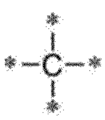, 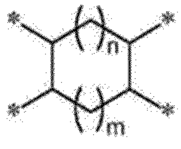, 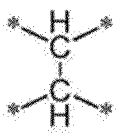, or 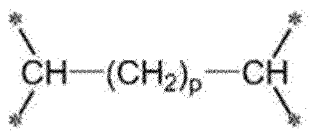;

L is selected from single bond or methylene group; m is an integer between 1 and 4; n is an integer between 0 and 2; and p is an integer between 0 and 6.

According to some embodiments of this application, the compounds represented by formula 1 are selected

from at least one of the following compounds:

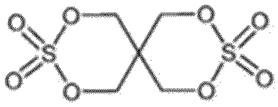
formula 1-1,

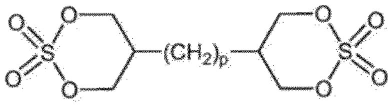
formula 1-2,

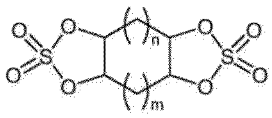
formula 1-3,

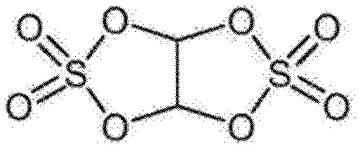
formula 1-4,

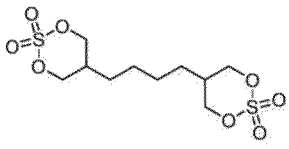
formula 1-5,

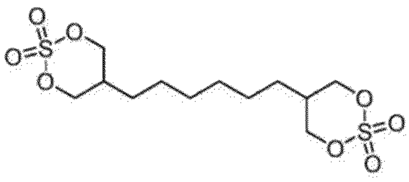
formula 1-6,

or

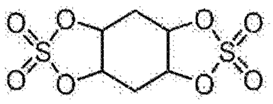
formula 1-7;

where m is an integer between 1 and 4; n is an integer between 0 and 2; and p is an integer between 0 and 6.

According to some embodiments of this application, a relationship between a mass percentage y of the S=O double bond-containing compound in the electrolyte and porosity V of the membrane satisfies $0.01 \leq y/V \leq 0.07$.

According to a third aspect of this application, an electronic device is provided, including the foregoing electrochemical apparatus.

The technical solutions of this application have at least the following beneficial effects.

For the electrode plate and the electrochemical apparatus and electronic device containing such electrode plate provided in this application, provision of the primer layer on the membrane of the electrode plate increases the adhesion between the membrane and the current collector, avoiding film fall-off of the electrode plate resulting from

swelling and shrinkage during cycling, thus significantly improving cycling and shape stability of the electrochemical apparatus, and ensuring excellent rate performance of the electrochemical apparatus. Additional aspects and advantages of the embodiments of this application are partly described and presented in subsequent descriptions, or explained by implementation of the embodiments of this application.

## BRIEF DESCRIPTION OF DRAWINGS

To describe embodiments of this application, the following briefly describes the accompanying drawings required for describing the embodiments of this application or the prior art. Apparently, the accompanying drawings described below are merely some embodiments of this application. Persons skilled in the art may still derive drawings for other embodiments from structures shown in these accompanying drawings without creative efforts.

FIG. 1 is a schematic structural diagram of an electrode plate according to an exemplary embodiment of this application;
FIG. 2 is a schematic cross-sectional diagram of an electrode plate according to an exemplary embodiment of this application;
FIG. 3 is a schematic picture of shape stability of electrode plates according to examples 1 to 9; and
FIG. 4 is a schematic picture of shape stability of electrode plates according to comparative examples 1 and 2.

Reference signs are as follows:

10. negative electrode current collector;
20. membrane;
201. primer layer; and
202. active substance layer.

## DESCRIPTION OF EMBODIMENTS

Embodiments of this application are described in detail below. The embodiments of this application should not be construed as a limitation on this application.

Unless otherwise expressly indicated, the following terms used in this specification have the meanings described below.

In description of embodiments and claims, a list of items connected by the terms "at least one of", "at least one piece of", "at least one kind of" or other similar terms may mean any combination of the listed items. For example, if items A and B are listed, the phrase "at least one of A or B" means only A; only B; or A and B. In another example, if items A, B, and C are listed, the phrase "at least one of A, B, or C" means only A; only B; only C; A and B (exclusive of C); A and C (exclusive of B); B and C (exclusive of A); or all of A, B, and C. The item A may contain a single element or a plurality of elements. The item B may contain a single element or a plurality of elements. The item C may contain a single element or a plurality of elements.

The term "and/or" or "/" used in this specification is only an associative relationship for describing associated objects, indicating that three relationships may be present. For example, A and/or B may indicate three cases: presence of only A; presence of both A and B; and presence of only B. Furthermore, for ease of description, the terms "first", "second", and the like used in this specification do not denote any sequence, quantity, or importance, but are merely used to distinguish different components.

In addition, quantities, ratios, and other values are sometimes presented in the format of ranges in this specification. It should be understood that such range formats are used for convenience and simplicity and should be flexibly understood as including not only values clearly designated as falling within the range but also all individual values or sub-ranges covered by the range as if each value and sub-range are clearly designated.

An electrode (positive electrode or negative electrode) of an electrochemical apparatus (for example, lithium-ion battery) is generally prepared by the following method: mixing an active material, a conductive agent, a thickener, a binder and a solvent, and then applying the resulting slurry mix on a current collector. In addition, a theoretical capacity of the electrochemical apparatus may change with the type of the active substance. As the cycling proceeds, charge/discharge capacity of the electrochemical apparatus generally decreases. This is because electrode interfaces of the electrochemical apparatus change during charging and/or discharging, causing the electrode active substance to fail to play its function.

In this application, the electrode plate with specified adhesion is used to ensure stability of the electrode plate in the electrochemical apparatus during cycling, avoiding film fall-off of the negative electrode plate resulting from swelling and shrinkage during cycling, thereby improving cycling performance of the electrochemical apparatus. The electrode

plate with specified adhesion in this application can be implemented by controlling a structure of the electrode plate and a type of functional group of the binder.

Some embodiments of this application provide an electrochemical apparatus including a positive electrode, a negative electrode, and an electrolyte as described below.

**[Negative electrode]**

As shown in FIG. 1 and FIG. 2, in some embodiments of this application, a negative electrode plate includes a negative electrode current collector 10 and a membrane 20. Adhesion between the membrane 20 and the negative electrode current collector 10 is greater than or equal to 20 N/m. The membrane 20 includes a primer layer 201 provided on a surface of the negative electrode current collector 10 and an active substance layer 202 provided on a surface of the primer layer 201, and the primer layer 201 includes a first binder and a first conductive agent.

Provision of the primer layer, including the first binder and the first conductive agent, on the membrane of the negative electrode plate increases the adhesion between the membrane and the negative electrode current collector, which correspondingly significantly improves cycling and shape stability of the negative electrode plate. Specifically, on one hand, presence of the primer layer can reduce surface defects of the negative electrode current collector, enhancing riveting effect between the active substance layer and the electrode plate, increasing the adhesion between the primer layer and the negative electrode current collector, thus increasing the adhesion between the entire membrane and the current collector, and reducing the risk of fall-off of the membrane. On the other hand, taking the negative electrode plate applied to a lithium-ion battery as an example, the presence of the primer layer can provide excellent buffering. When the negative electrode active substance swells due to intercalation of lithium ions, the primer layer prevents the swelling active substance from directly exerting force on the surface of the current collector. If a force is directly applied to the surface of the current collector, because the current collector is fixed in this direction and cannot be displaced, the active substance can only swell as a whole toward the outer surface of the membrane. When the negative electrode active substance shrinks due to deintercalation of lithium ions, all parts of the active substance tend to shrink synchronously/or the inner side with better electronic conductivity may shrink faster. This causes the active substance formerly in close contact with the surface of the current collector to be separated from the current collector, thus leading to fall-off of the membrane as well as the increased internal resistance and decreased cycling performance. In view of this, the electrode plate in the embodiments of this application can significantly increase the adhesion between the membrane and the current collector. In some embodiments of this application, the adhesion between the membrane and the current collector is limited to be greater than or equal to 20 N/m. The electrode plate with specified adhesion is used to ensure stability of the electrode plate in the electrochemical apparatus during cycling, avoiding film fall-off of the electrode plate resulting from swelling and shrinkage during cycling, and thereby improving cycling performance of the electrochemical apparatus.

In some embodiments, the adhesion between the membrane and the current collector is greater than or equal to 80 N/m; more preferably, in some embodiments, the adhesion between the membrane and the current collector is greater than or equal to 100 N/m; and more preferably, in some embodiments, the adhesion between the membrane and the current collector is greater than or equal to 500 N/m. For example, the adhesion between the membrane and the current collector is 20 N/m, 60 N/m, 80 N/m, 100 N/m, 120 N/m, 130 N/m, 160 N/m, 180 N/m, 220 N/m, 300 N/m, 400 N/m, 500 N/m, 540 N/m, 600 N/m, 630 N/m, or the like.

In some embodiments, thickness of the primer layer is 100 nm (nanometer) to 2 μm (micrometer); preferably, in some embodiments, the thickness of the primer layer is 100 nm to 1000 nm; and more preferably, in some embodiments, the thickness of the primer layer is 100 nm to 800 nm. The thickness of the primer layer should not be too large, and the thickness of the primer layer is preferably at nanoscale, which is helping obtain the desired adhesion between the membrane and the current collector, and implementing more excellent sheet resistance and cycling stability. Typically but not limitedly, the thickness of the primer layer is, for example, 100 nm, 200 nm, 300 nm, 400 nm, 500 nm, 600 nm, 800 nm, 900 nm, 950 nm, 999 nm, 1 μm, 1.5 μm, 2 μm, or in a range defined by any two of these values or any value in the range thereof.

In some embodiments, a relationship between average particle size or average tube diameter D of the first conductive agent and thickness H of the primer layer satisfies the following: D/H is 0.25 to 1.5, and preferably 0.5 to 1.25.

It should be understood that the first conductive agent may be in a granular or tubular form. When the first conductive agent is granular, the relationship between the average particle size D of the first conductive agent and the thickness H of the primer layer satisfies the following: D/H is 0.5-1.25. When the first conductive agent is tubular, the relationship between the average tube diameter D of the first conductive agent and the thickness H of the primer layer satisfies the following: D/H is 0.5-1.25. Typically but not limitedly, average particle size or average tube diameter D/thickness H of the primer layer is, for example, 0.5, 0.6, 0.7, 0.8, 0.9, 1.0, 1.1, 1.2, 1.25, or in a range defined by any two of these values or any value in the range thereof. The above range of the ratio of the average particle size or average tube diameter to the thickness of the primer layer satisfied, the electrode plate can have more excellent sheet resistance and

cycling stability. In some embodiments of this application, average particle size or average tube diameter D/thickness H of the primer layer being less than 0.5 leads to excessive small particles of the first conductive agent present in the primer layer, and accumulation of the excessive small particles of the first conductive agent leads to excessive interface resistance, thus leading to increased sheet resistance and reduced cycling stability. Average particle size or average tube diameter D/thickness H of the primer layer being greater than 1.25 is prone to cause uneven distribution of the first conductive agent in the primer layer, thus leading to increased sheet resistance and affected cycling performance.

In some embodiments, sheet resistance of the membrane is 3 mΩ-50 mΩ. Preferably, in some embodiments, the sheet resistance of the membrane is 3 mΩ-30 mΩ. Typically but not limitedly, the sheet resistance of the membrane is, for example, 3 mΩ, 5 mΩ, 6 mΩ, 9 mΩ, 10 mΩ, 15 mΩ, 20 mΩ, 22 mΩ, 26 mΩ, 30 mΩ, 50 mΩ, or in a range defined by any two of these values or any value in the range thereof.

In some embodiments, compacted density of the membrane is 1.30 g/cm$^3$-1.80 g/cm$^3$. Typically but not limitedly, the compacted density of the membrane is, for example, 1.30 g/cm$^3$, 1.40 g/cm$^3$, 1.50 g/cm$^3$, 1.55 g/cm$^3$, 1.60 g/cm$^3$, 1.70 g/cm$^3$, 1.75 g/cm$^3$, 1.80 g/cm$^3$, or in a range defined by any two of these values or any value in the range thereof. Appropriate range of the compacted density of the membrane being satisfied is conducive to reducing the risk of film fall-off of the electrode plate, which ensures the presence of the primer layer between the active substance layer and the current collector. The primer layer can provide riveting and buffering, thus helping obtain more excellent cycling stability and rate performance.

In some embodiments, porosity of the membrane is 20%-50%. Preferably, in some embodiments, the porosity of the membrane is 25%-40%. Typically but not limitedly, the porosity of the membrane is, for example, 20%, 22%, 24%, 25%, 26%, 28%, 30%, 32%, 35%, 37%, 40%, 45%, 50%, or in a range defined by any two of these values or any value in the range thereof. Appropriate range of the porosity of the membrane being satisfied is conducive to reducing the risk of film fall-off of the electrode plate, which ensures the presence of the primer layer between the active substance layer and the current collector. The primer layer can provide riveting and buffering, and fully contact the electrolyte, thus helping obtain more excellent cycling stability and rate performance.

In some embodiments, a mass percentage of the first binder in the primer layer is 20%-95%. Typically but not limitedly, the mass percentage of the first binder in the primer layer is, for example, 20%, 30%, 40%, 50%, 60%, 65%, 70%, 72%, 80%, 83%, 85%, 90%, 91%, 95%, or in a range defined by any two of these values or any value in the range thereof. By increasing the percentage of the first binder in the primer layer, the adhesion between the membrane and the current collector can be increased, and the electrode plate with higher adhesion can be obtained.

In some embodiments, a mass percentage of the first conductive agent in the primer layer is 5%-80%. Typically but not limitedly, the mass percentage of the first conductive agent in the primer layer is, for example, 5%, 10%, 20%, 30%, 40%, 50%, 55%, 60%, 70%, 80%, or in a range defined by any two of these values or any value in the range thereof.

In some embodiments, the first binder includes at least one of these functional groups: carbon-carbon double bond, carboxyl group, carbonyl group, carbon-nitrogen single bond, hydroxyl group, ester group, acyl group, and aryl group. Preferably, in some embodiments, the first binder includes at least one of these functional groups: carboxyl group, carbonyl group, carbon-nitrogen single bond, hydroxyl group, ester group, and acyl group. Use of the first binder containing one or more of the functional groups: carboxyl group, carbonyl group, carbon-nitrogen single bond, hydroxyl group, ester group, and acyl group can significantly increase the adhesion between the membrane and the current collector. This is because the functional groups have strong polarity and have strong attraction with a metal current collector rich in electrons, making the shape stability of the membrane more desirable, and maintaining excellent shape stability even for highly swelling silicon-based active substances.

In some embodiments, the first binder includes at least one of SBR (styrene-butadiene rubber), PAA (polyacrylic acid), PVP (polyvinylpyrrolidone), or PAM (polyacrylamide).

In some embodiments, the first conductive agent includes but is not limited to at least one of conductive carbon black, Ketjen black, single-walled carbon nanotubes, or multi-walled carbon nanotubes.

In some embodiments, the active substance layer includes an active substance and a second binder.

In some embodiments, the active substance includes at least one of graphite-type material or silicon-based material.

In some embodiments, the silicon-based material includes at least one of silicon, silicon oxide, silicon-carbon composite, or silicon alloy. Preferably, in some embodiments, the silicon-based material includes at least one of pure silicon, $SiO_x$ ($0 < x \leq 2$), or silicon-carbon composite, and preferably $SiO_x$ ($0 < x \leq 2$). The negative electrode active substance may be used alone or in combination.

In some embodiments, the active substance layer further includes a second conductive agent. For the membrane, the primer layer includes the first conductive agent, and the active substance layer may include or not include the second conductive agent.

According to some embodiments of this application, the first binder in the primer layer and the second binder in the active substance layer may use the same type of binder or different types of binders. The first conductive agent in the primer layer and the second conductive agent in the active substance layer may use the same type of conductive

agent or different types of conductive agents.

The second binder in the active substance layer can enhance bonding between particles of the negative electrode active substance and bonding between the negative electrode active substance and the primer layer. The type of the binder in the negative electrode active substance layer is not particularly limited in the embodiments of this application, provided that its material is stable to the electrolyte or a solvent used in manufacturing the electrode. For example, in some embodiments, the second binder includes a resin binder. Instances of the resin binder include but are not limited to fluororesin, polyacrylonitrile (PAN), polyimide resin, acrylic resin, and polyolefin resin. When an aqueous solvent is used to prepare a negative electrode active substance layer slurry, the second binder includes but is not limited to carboxymethyl cellulose (CMC) or its salt, styrene-butadiene rubber (SBR), polyacrylic acid (PAA) or its salt, and polyvinyl alcohol. Preferably, in some embodiments, the second binder includes at least one of PAA (polyacrylic acid), PVP (polyvinylpyrrolidone), PAM (polyacrylamide) SBR (styrene-butadiene rubber), or CMC (carboxymethyl cellulose).

In some embodiments, molecular weight of the first binder is less than 1,500,000. Molecular weight of the second binder is less than 1,500,000.

In some embodiments, the second conductive agent includes but is not limited to at least one of conductive carbon black, Ketjen black, single-walled carbon nanotubes, or multi-walled carbon nanotubes.

In some embodiments, the active substance layer includes the active substance with a mass percentage of 80%-99%, the second binder with a mass percentage of 0.8%-20%, and the second conductive agent with a mass percentage of 0-5%. Typically but not limitedly, in the active substance layer, the mass percentage of the active substance is, for example, 80%, 82%, 84%, 85%, 86%, 88%, 90%, 92%, 94%, 95%, 96%, 99%, or in a range defined by any two of these values or any value in the range thereof; the mass percentage of the second binder is, for example, 0.8%, 1%, 2%, 4%, 5%, 6%, 8%, 10%, 12%, 15%, 18%, 20%, or in a range defined by any two of these values or any value in the range thereof; and the mass percentage of the second conductive agent is, for example, 0, 1%, 2%, 3%, 4%, 5%, or in a range defined by any two of these values or any value in the range thereof.

In some embodiments, a rechargeable capacity of the negative electrode active substance is greater than a discharge capacity of the positive electrode active substance to prevent lithium metal from unexpectedly precipitating onto the negative electrode during charging.

As a negative electrode current collector for holding the negative electrode active substance, the negative electrode current collector may use any known current collector. Instances of the negative electrode current collector include but are not limited to metal materials such as aluminum, copper, nickel, stainless steel, and nickel-plated steel. In some embodiments, the negative electrode current collector is copper.

In a case that the negative electrode current collector is a metal material, the negative electrode current collector may take forms including but not limited to a metal foil, a metal cylinder, a metal coil, a metal plate, a metal film, a sheet metal mesh, a punched metal, and a foamed metal. In some embodiments, the negative electrode current collector is a metal film. In some embodiments, the negative electrode current collector is a copper foil. In some embodiments, the negative electrode current collector is a rolled copper foil based on a rolling method or an electrolytic copper foil based on an electrolytic method.

In some embodiments, thickness of the negative electrode current collector is greater than 1 μm or greater than 5 μm. In some embodiments, the thickness of the negative electrode current collector is less than 100 μm or less than 50 μm. In some embodiments, the thickness of the negative electrode current collector falls within a range defined by any two of the foregoing values.

The negative electrode may be prepared by using the following method: applying a primer layer slurry containing the first binder and the first conductive agent on the negative electrode current collector, after drying, applying an active substance layer slurry containing the negative electrode active substance, the second binder, and the like on the primer layer, and after drying, performing rolling to form a negative electrode membrane on the negative electrode current collector, thereby obtaining the negative electrode (that is, the negative electrode plate).

**[Positive electrode]**

In some embodiments of this application, a positive electrode plate includes a positive electrode current collector and a positive electrode active substance layer disposed on one or two surfaces of the positive electrode current collector.

The positive electrode active substance layer contains a positive electrode active substance. The positive electrode active substance layer may be one or more layers, and each of the plurality of layers of the positive electrode active substance may contain the same or different positive electrode active substances. With the electrochemical apparatus being a lithium-ion battery as an example, the positive electrode active substance is any substance capable of reversibly intercalating and deintercalating metal ions such as lithium ions. In some embodiments, a discharge capacity of the positive electrode active substance is less than a rechargeable capacity of the negative electrode active substance to prevent lithium metal from unexpectedly precipitating onto the negative electrode during charging.

According to some embodiments of this application, the positive electrode active material is not particularly

limited in type, provided that metal ions (for example, lithium ions) can be electrochemically absorbed and released. For example, in some embodiments, the positive electrode active material refers to a substance containing lithium and at least one transition metal. Instances of the positive electrode active material may include but are not limited to a lithium transition metal composite oxide and a lithium-containing transition metal phosphate compound.

In some embodiments, the transition metal in the lithium transition metal composite oxide includes V, Ti, Cr, Mn, Fe, Co, Ni, Cu, and the like In some embodiments, the lithium transition metal composite oxide includes: lithium cobalt composite oxide such as $LiCoO_2$; lithium nickel composite oxide such as $LiNiO_2$; lithium manganese composite oxide such as $LiMnO_2$, $LiMn_2O_4$, and $Li_2MnO_4$; and lithium nickel manganese cobalt composite oxide such as $LiNi_{1/3}Mn_{1/3}Co_{1/3}O_2$ and $LiNi_{0.5}Mn_{0.3}Co_{0.2}O_2$; where a portion of transition metal atoms as the main body of these lithium transition metal composite oxides are substituted by other elements such as Na, K, B, F, Al, Ti, V, Cr, Mn, Fe, Co, Li, Ni, Cu, Zn, Mg, Ga, Zr, Si, Nb, Mo, Sn, and W. Instances of the lithium transition metal composite oxide may include but are not limited to $LiNi_{0.5}Mn_{0.5}O_2$, $LiNi_{0.85}Co_{0.10}Al_{0.05}O_2$, $LiNi_{0.33}Co_{0.33}Mn_{0.33}O_2$, $LiNi_{0.45}Co_{0.10}Al_{0.45}O_2$, $LiMn_{1.8}Al_{0.2}O_4$, and $LiMn_{1.5}Ni_{0.5}O_4$. Instances of a combination of lithium transition metal composite oxides include but are not limited to a combination of $LiCoO_2$ and $LiMn_2O_4$, where part of Mn in $LiMn_2O_4$ may be substituted by the transition metal (for example, $LiNi_{0.33}Co_{0.33}Mn_{0.33}O_2$), and a portion of Co in $LiCoO_2$ may be substituted by the transition metal.

In some embodiments, the transition metal in the lithium-containing transition metal phosphate compound includes V, Ti, Cr, Mn, Fe, Co, Ni, Cu, and the like. In some embodiments, the lithium-containing transition metal phosphate compound includes $LiFePO_4$, $Li_3Fe_2(PO_4)_3$, iron phosphate type such as $LiFeP_2O_7$, and cobalt phosphate type such as $LiCoPO_4$, where a portion of transition metal atoms serving as the main body of these lithium transition metal phosphate compounds are substituted by other elements such as Al, Ti, V, Cr, Mn, Fe, Co, Li, Ni, Cu, Zn, Mg, Ga, Zr, Nb, and Si.

In some embodiments, a powdery material of the lithium transition metal oxide $Li_aM_bO_2$ is used, where $0.9 < a < 1.1$, $0.9 < b < 1.1$, M is dominantly a transition metal selected from Mn, Co, and Ni, and the composition M varies with the particle size.

In some embodiments, in the powdery electrode active material of lithium transition metal oxide $Li_aM_bO_2$, $M = A_zA'_{Z'}M'_{1-Z-Z'}$, $M' = Mn_xNi_yCo_{1-x-y}$, $0 \leq y \leq 1$, $0 < x \leq 1$, $0 \leq Z + Z' < 0.1$, $Z' < 0.02$, A is selected from at least one of element Al, Mg, Ti, or Cr, and A' is selected from at least one of element F, Cl, S, Zr, Ba, Y, Ca, B, Be, Sn, Sb, Na, or Zn.

In some embodiments, an average composition of the transition metal is $M = Mn_xNi_yCo_{1-x-y}$, where $0.03 < x < 0.35$.

In some embodiments, an average composition of the transition metal is $M = Mn_xNi_yCo_{1-x-y}$, where $0.03 < x$, and $x + y < 0.7$.

In some embodiments, basically all bulk of all particles in a powdery electrode active material of $Li_aM_bO_2$ with a composition-size dependence have a layered crystal structure, larger particles having a composition $Li_aM_bO_2$, where $M = Mn_xNi_yCo_{1-x-y}$, and $x + y < 0.35$, and smaller particles having a composition $Li_aM_bO_2$, where $M = Mn_{x'}Ni_{y'}Co_{1-x'-y'}$, with at least 10% less Co, $(1-x'-y') < 0.9 \times (1-x-y)$, at least 5% more Mn, and $x' - x > 0.05$. In this way, powders with a composition-size dependence can be obtained, that is, with one component having large particles (for example, distribution is concentrated at $\geq 20$ $\mu$m) and capable of fast bulk diffusion and another component having small particles (for example, distribution is around 5 $\mu$m) and capable of ensuring safety, thereby providing an electrode active material that combines high cycling stability and high safety with high volumetric energy density and high gravimetric energy density.

In some embodiments, the positive electrode active material has wide particle size distribution, which is defined as that the particle size ratio of large particles to small particles is greater than 3, and $D_v90/D_v10 > 3$, where $D_v90$ indicates a particle size where the cumulative distribution by volume reaches 90% as counted from the small particle size side. $D_v10$ indicates a particle size where the cumulative distribution by volume reaches 10% as counted from the small particle size side. The particle size distribution of the powder may be determined using an appropriate method known in the art. Suitable methods such as laser diffraction or a set of sieves with different mesh numbers are used for sieving.

In some embodiments, the single particles are basically lithium transition metal oxide, and the single particles have a Co content in the transition metal continuously increasing with the particle size.

In some embodiments, the single particles further contain Mn in the transition metal and have the Mn content continuously decreasing with the particle size.

In some embodiments, the large particles have a composition near to $LiCoO_2$ allowing for a high Li diffusion constant, and thus a sufficient rate performance is achieved. The large particles contribute only a small fraction to the total surface area of the positive electrode. Therefore, the amount of heat evolving from reactions with electrolyte at the surface or in the outer bulk is limited, and as a result, the large particles contribute little to poor safety. The small particles have a composition with less Co to achieve enhanced safety. A lower lithium diffusion constant can be tolerated in small particles without significant loss of rate performance because a solid state diffusion path is short.

In some embodiments, a preferred composition of the small particles contains less Co and more stable elements

like Mn. Slower Li bulk diffusion can be tolerated and the surface stability is high. In the cathode active material powder of this application, a preferred composition of the large particles contains more Co and less Mn because a fast lithium bulk diffusion is required, whereas slightly lower surface stability can be tolerated.

In some embodiments, in the inner bulk of a single particle with a composition of $Li_xMO_2$, preferably at least 80w% of M is cobalt or nickel. In some embodiments, the inner bulk of the particle has a composition near to $LiCoO_2$. The outer bulk is a lithium manganese nickel cobalt oxide.

The powdery electrode active material with a composition and size dependence may be prepared using the following method: depositing at least one transition metal-containing precipitate on seed crystals, where the seed particles have a different transition metal composition from the precipitate; adding a controlled amount of lithium sources; and performing at least one heat treatment, where substantially all the obtained particles contain a core originating from a seed crystal and completely covered by a layer originating from the precipitate.

**[Electrolyte]**

The electrolyte used in the electrochemical apparatus of this application includes an electrolytic salt and a solvent for dissolving the electrolytic salt. In some embodiments, the electrolyte used in the electrochemical apparatus of this application further includes an additive.

In some embodiments, the electrolyte further contains any non-aqueous solvent that is known in the art and that may be used as a solvent for the electrolyte.

In some embodiments, the non-aqueous solvent includes but is not limited to one or more of the following: cyclic carbonate, linear carbonate, cyclic carboxylate, linear carboxylate, cyclic ether, linear ether, a phosphorus-containing organic solvent, a sulfur-containing organic solvent, and an aromatic fluorine-containing solvent.

In some embodiments, instances of the cyclic carbonate may include but are not limited to one or more of the following: ethylene carbonate (EC), propylene carbonate (PC), and butylene carbonate. In some embodiments, the cyclic carbonate has 3 to 6 carbon atoms.

In some embodiments, instances of the linear carbonate may include but are not limited to one or more of the following: dimethyl carbonate, ethyl methyl carbonate, diethyl carbonate (DEC), methyl n-propyl carbonate, ethyl n-propyl carbonate, and dipropyl carbonate. Instances of the linear carbonate substituted with fluorine may include but are not limited to one or more of the following: bis(fluoromethyl) carbonate, bis(difluoromethyl) carbonate, bis(trifluoromethyl) carbonate, bis(2-fluoroethyl) carbonate, bis(2,2-difluoroethyl) carbonate, bis(2,2,2-trifluoroethyl) carbonate, 2-fluoroethyl methyl carbonate, 2,2-difluoroethyl methyl carbonate, and 2,2,2-trifluoroethyl methyl carbonate.

In some embodiments, instances of the cyclic carboxylate may include but are not limited to one or more of the following: γ-butyrolactone and γ-valerolactone. In some embodiments, some hydrogen atoms in the cyclic carboxylate may be substituted with fluorine.

In some embodiments, instances of the linear carboxylate may include but are not limited to one or more of the following: methyl acetate, ethyl acetate, propyl acetate, isopropyl acetate, butyl acetate, sec-butyl acetate, isobutyl acetate, tert-butyl acetate, methyl propionate, ethyl propionate, propyl propionate, isopropyl propionate, methyl butyrate, ethyl butyrate, propyl butyrate, methyl isobutyrate, ethyl isobutyrate, methyl valerate, ethyl valerate, methyl pivalate, and ethyl pivalate. In some embodiments, some hydrogen atoms in the linear carboxylate may be substituted with fluorine. In some embodiments, instances of the fluorine-substituted linear carboxylate may include but are not limited to methyl trifluoroacetate, ethyl trifluoroacetate, propyl trifluoroacetate, butyl trifluoroacetate, and 2,2,2-trifluoroethyl trifluoroacetate.

In some embodiments, instances of the cyclic ether may include but are not limited to one or more of the following: tetrahydrofuran, 2-methyltetrahydrofuran, 1,3-dioxolane, 2-methyl 1,3-dioxolane, 4-methyl 1,3-dioxolane, 1,3-dioxane, 1,4-dioxane, and dimethoxypropane.

In some embodiments, instances of the linear ether may include but are not limited to one or more of the following: dimethoxymethane, 1,1-dimethoxyethane, 1,2-dimethoxyethane, diethoxymethane, 1,1-diethoxyethane, 1,2-diethoxyethane, ethoxymethoxymethane, 1,1-ethoxymethoxyethane, and 1,2-ethoxymethoxyethane.

In some embodiments, instances of the phosphorus-containing organic solvent may include but are not limited to one or more of the following: trimethyl phosphate, triethyl phosphate, dimethyl ethyl phosphate, methyl diethyl phosphate, ethylene methyl phosphate, ethylene ethyl phosphate, triphenyl phosphate, trimethyl phosphite, triethyl phosphite, triphenyl phosphite, tris(2,2,2-trifluoroethyl) phosphate, and tris(2,2,3,3,3-pentafluoropropyl) phosphate.

In some embodiments, instances of the sulfur-containing organic solvent may include but are not limited to one or more of the following: sulfolane, 2-methylsulfolane, 3-methylsulfolane, dimethyl sulfone, diethyl sulfone, ethyl methyl sulfone, methyl propyl sulfone, dimethyl sulfoxide, methyl methanesulfonate, ethyl methanesulfonate, methyl ethanesulfonate, ethyl ethanesulfonate, dimethyl sulfate, diethyl sulfate, and dibutyl sulfate. In some embodiments, some hydrogen atoms in the sulfur-containing organic solvent may be substituted with fluorine.

In some embodiments, the aromatic fluorine-containing solvent includes but is not limited to one or more of the

following: fluorobenzene, difluorobenzene, trifluorobenzene, tetrafluorobenzene, pentafluorobenzene, hexafluorobenzene, and trifluoromethylbenzene.

In some embodiments, the solvent used in the electrolyte in this application includes cyclic carbonate, linear carbonate, cyclic carboxylate, linear carboxylate, or a combination thereof. In some embodiments, the solvent used in the electrolyte in this application includes at least one of ethylene carbonate, propylene carbonate, diethyl carbonate, ethyl propionate, propyl propionate, propyl acetate, or ethyl acetate. In some embodiments, the solvent used in the electrolyte in this application includes ethylene carbonate, propylene carbonate, diethyl carbonate, ethyl propionate, propyl propionate, γ-butyrolactone, or a combination thereof.

With cyclic carboxylate and/or linear carboxylate added into the electrolyte, the cyclic carboxylate and/or linear carboxylate may form a passivation film on a surface of the electrode to improve the capacity retention rate of the electrochemical apparatus after intermittent charge cycles. In some embodiments, 1% to 60% of the electrolyte is linear carboxylate, cyclic carboxylate, or a combination thereof. In some embodiments, the electrolyte contains ethyl propionate, propyl propionate, γ-butyrolactone, or a combination thereof, and based on a total weight of the electrolyte, a percentage of the combination is 1% to 60%, 10% to 60%, 10% to 50%, or 20% to 50%. In some embodiments, based on a total weight of the electrolyte, 1% to 60%, 10% to 60%, 20% to 50%, 20% to 40%, or 30% of the electrolyte is propyl propionate.

In some embodiments, the electrolyte includes an additive, and instances of the additive may include but are not limited to one or more of the following: fluorocarbonate, carbon-carbon double bond-containing ethylene carbonate, sulfur-oxygen double bond-containing (S=O double bond-containing) compound, and anhydride. Preferably, the additive includes the S=O double bond-containing compound.

In some embodiments, based on a total weight of the electrolyte, a percentage of the additive is 0.01%-15%, 0.1%-10%, or 1%-5%.

According to an embodiment of this application, based on a total weight of the electrolyte, a percentage of propionate is 1.5 to 30 times, 1.5 to 20 times, 2 to 20 times, or 5 to 20 times that of the additive.

In some embodiments, the additive includes one or more fluorocarbonates. During charging/discharging of the lithium-ion battery, the fluorocarbonate may act with the propionate to form a stable protective film on the surface of the negative electrode, so as to suppress decomposition reaction of the electrolyte.

In some embodiments, the fluorocarbonate has a formula $C=O(OR_1)(OR_2)$, where $R_1$ and $R_2$ each are selected from an alkyl group or haloalkyl group having 1 to 6 carbon atoms. At least one of $R_1$ or $R_2$ is selected from a fluoroalkyl group having 1 to 6 carbon atoms. $R_1$ and $R_2$, optionally together with the atoms to which they are attached, form a 5- to 7-membered ring.

In some embodiments, instances of the fluorocarbonate may include but are not limited to one or more of the following: fluoroethylene carbonate, cis-4,4-difluoroethylene carbonate, trans-4,4-difluoroethylene carbonate, 4,5-difluoroethylene carbonate, 4-fluoro-4-methyl ethylene carbonate, 4-fluoro-5-methyl ethylene carbonate, trifluoromethyl methyl carbonate, trifluoroethyl methyl carbonate, and trifluoroethyl ethyl carbonate.

In some embodiments, the additive includes one or more carbon-carbon double bond-containing ethylene carbonates. Instances of the carbon-carbon double bond-containing ethylene carbonate may include but are not limited to one or more of the following: vinylene carbonate, methylvinylidene carbonate, ethylvinylidene carbonate, 1,2-dimethylvinylidene carbonate, 1,2-diethylvinylidene carbonate, fluorovinylidene carbonate, trifluoromethylvinylidene carbonate, vinylethylene carbonate, 1-methyl-2-vinylethylene carbonate, 1-ethyl-2-vinylethylene carbonate, 1-n-propyl-2-vinylethylene carbonate, 1-methyl-2-vinylethylene carbonate, 1,1-divinylethylene carbonate, 1,2-divinylethylene carbonate, 1,1-dimethyl-2-methylene ethylene carbonate, and 1,1-diethyl-2-methylene ethylene carbonate. In some embodiments, the carbon-carbon double bond-containing ethylene carbonate includes vinylene carbonate, is easily available, and can achieve better effects.

In some embodiments, the additive includes one or more sulfur-oxygen double bond-containing compounds. Instances of the sulfur-oxygen double bond-containing compound may include but are not limited to one or more of the following: cyclic sulfate, linear sulfate, linear sulfonate, cyclic sulfonate, linear sulfite, and cyclic sulfite.

Instances of the cyclic sulfate may include but are not limited to one or more of the following: 1,2-ethylene glycol sulfate, 1,2-propanediol sulfate, 1,3-propanediol sulfate, 1,2-butanediol sulfate, 1,3-butanediol sulfate, 1,4-butanediol sulfate, 1,2-pentanediol sulfate, 1,3-pentanediol sulfate, 1,4-pentanediol sulfate, and 1,5-pentanediol sulfate.

Instances of the linear sulfate may include but are not limited to one or more of the following: dimethyl sulfate, ethyl methyl sulfate, and diethyl sulfate.

Instances of the linear sulfonate may include but are not limited to one or more of the following: fluorosulfonate such as methyl fluorosulfonate and ethyl fluorosulfonate, methyl methanesulfonate, ethyl methanesulfonate, butyl dimethanesulfonate, methyl 2-(methanesulfonyloxy) propionate, and ethyl 2-(methanesulfonyloxy) propionate.

Instances of the cyclic sulfonate may include but are not limited to one or more of the following: 1,3-propanesulfonate, 1-fluoro-1,3-propanesulfonate, 2-fluoro-1,3-propanesulfonate, 3-fluoro-1,3-propanesulfonate, 1-methyl-1,3-propanesulfonate, 2-methyl-1,3-propanesulfonate, 3-methyl-1,3-propanesulfonate, 1-propylene-1,3-sulfonate, 2-propylene-1,3-sulfonate, 1-fluoro-1-propylene-1,3-sulfonate, 2-fluoro-1-propylene-1,3-sulfonate, 3-fluoro-1-propylene-1,3-sulfonate, 1-fluoro-2-propylene-1,3-sulfonate, 2-fluoro-2-propylene-1,3-sulfonate, 3-fluoro-2-propylene-1,3-sulfonate, 1-methyl-1-propylene-1,3-sulfonate, 2-methyl-1-propylene-1,3-sulfonate, 3-methyl-1-propylene-1,3-sulfonate, 1-methyl-2-propylene-1,3-sulfonate, 2-methyl-2-propylene-1,3-sulfonate, 3-methyl-2-propylene-1,3-sulfonate, 1,4-butane sulfonate, 1,5-pentanesulfonate, methylene methane disulfonate, and ethylene methane disulfonate.

Instances of the linear sulfite may include but are not limited to one or more of the following: dimethyl sulfite, ethyl methyl sulfite, and diethyl sulfite.

Instances of the cyclic sulfite may include but are not limited to one or more of the following: 1,2-ethylene glycol sulfite, 1,2-propanediol sulfite, 1,3-propanediol sulfite, 1,2-butanediol sulfite, 1,3-butanediol sulfite, 1,4-butanediol sulfite, 1,2-pentanediol sulfite, 1,3-pentanediol sulfite, 1,4-pentanediol sulfite, and 1,5-pentanediol sulfite.

In some embodiments, the additive includes one or more acid anhydrides. Instances of the acid anhydride may include but are not limited to one or more of cyclic phosphoric anhydride, carboxylic anhydride, disulfonic anhydride, and carboxylic acid sulfonic anhydride. Instances of the cyclic phosphoric anhydride may include but are not limited to one or more of trimethylphosphoric acid cyclic anhydride, triethylphosphoric acid cyclic anhydride, and tripropylphosphoric acid cyclic anhydride. Instances of the carboxylic anhydride may include but are not limited to one or more of succinic anhydride, glutaric anhydride, and maleic anhydride. Instances of the disulfonic acid anhydride may include but are not limited to one or more of ethane disulfonic acid anhydride and propane disulfonic acid anhydride. Instances of the carboxylic acid sulfonic anhydride may include but are not limited to one or more of sulfobenzoic anhydride, sulfopropionic anhydride, and sulfobutyric anhydride.

In some embodiments, the additive is a combination of fluorocarbonate and carbon-carbon double bond containing ethylene carbonate. In some embodiments, the additive is a combination of fluorocarbonate and the sulfur-oxygen double bond-containing compound. In some embodiments, the additive is a combination of fluorocarbonate and a compound having 2 to 4 cyano groups. In some embodiments, the additive is a combination of fluorocarbonate and cyclic carboxylate. In some embodiments, the additive is a combination of fluorocarbonate and cyclic phosphoric anhydride. In some embodiments, the additive is a combination of fluorocarbonate and carboxylic anhydride. In some embodiments, the additive is a combination of fluorocarbonate and sulfonic anhydride. In some embodiments, the additive is a combination of fluorocarbonate and carboxylic acid sulfonic anhydride.

According to some embodiments of this application, the electrolytic salt is not particularly limited. Any substance commonly known as being applicable to serve as an electrolytic salt can be used. For lithium secondary batteries, lithium salts are typically used. Instances of the electrolytic salt may include but are not limited to: inorganic lithium salts such as $LiPF_6$, $LiBF_4$, $LiClO_4$, $LiAlF_4$, $LiSbF_6$, $LiTaF_6$, and $LiWF_7$; lithium tungstates such as LiWOFs; lithium carboxylate salts such as $HCO_2Li$, $CH_3CO_2Li$, $CH_2FCO_2Li$, $CHF_2CO_2Li$, $CF_3CO_2Li$, $CF_3CH_2CO_2Li$, $CF_3CF_2CO_2Li$, $CF_3CF_2CF_2CO_2Li$, and $CF_3CF_2CF_2CF_2CO_2Li$; lithium sulfonates salts such as $FSO_3Li$, $CH_3SO_3Li$, $CH_2FSO_3Li$, $CHF_2SO_3Li$, $CF_3SO_3Li$, $CF_3CF_2SO_3Li$, $CF_3CF_2CF_2SO_3Li$, and $CF_3CF_2CF_2CF_2SO_3Li$; lithium imide salts such as $LiN(FCO)_2$, $LiN(FCO)(FSO_2)$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethane disulfonimide, lithium cyclic 1,3-perfluoropropane disulfonimide, and $LiN(CF_3SO_2)(C_4F_9SO_2)$; lithium methide salts such as $LiC(FSO_2)_3$, $LiC(CF_3SO_2)_3$, and $LiC(C_2F_5SO_2)_3$; lithium (malonate) borate salts such as lithium bis(malonate) borate and lithium difluoro(malonate) borate; lithium (malonato)phosphate salts such as lithium tris(malonato)phosphate, lithium difluorobis(malonato)phosphate, and lithium tetrafluoro(malonato)phosphate; fluorine-containing organolithium salts such as $LiPF_4(CF_3)_2$, $LiPF_4(C_2F_5)_2$, $LiPF_4(CF_3SO_2)_2$, $LiPF_4(C_2F_5SO_2)_2$, $LiBF_3CF_3$, $LiBF_3C_2F_5$, $LiBF_3C_3F_7$, $LiBF_2(CF_3)_2$, $LiBF_2(C_2F_5)_2$, $LiBF_2(CF_3SO_2)_2$, and $LiBF_2(C_2F_5SO_2)_2$; lithium oxalatoborate salts such as lithium difluorooxalatoborate and lithium bis(oxalato)borate; and lithium oxalatophosphate salts such as lithium tetrafluorooxalatophosphate, lithium difluorobis(oxalato)phosphate, and lithium tris(oxalato)phosphate.

In some embodiments, the electrolytic salt is selected from $LiPF_6$, $LiSbF_6$, $FSO_3Li$, $CF_3SO_3Li$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethane disulfonimide, lithium cyclic 1,3-perfluoropropane disulfonimide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$, $LiPF_3(C_2F_5)_3$, lithium difluorooxalatoborate, lithium bis(oxalato)borate, or lithium difluorobis(oxalato)phosphate, which helps improve characteristics of the electrochemical apparatus such as output power, high-rate charge/discharge, high-temperature storage, and cycling characteristics.

The concentration of the electrolytic salt is not particularly limited, provided that the effects of this application are not impaired. For example, in some embodiments, the total molar concentration of lithium in the electrolyte is greater than or equal to 0.3 mol/L, greater than 0.4 mol/L, or greater than 0.5 mol/L. In some embodiments, the total molar concentration of lithium in the electrolyte is less than 3 mol/L, less than 2.5 mol/L, or less than or equal to 2.0 mol/L. In some embodiments, the total molar concentration of lithium in the electrolyte falls within a range defined by any two of the foregoing values. When the concentration of the electrolytic salt falls within the foregoing range, the amount of lithium as charged particles would not be excessively small, and the viscosity can be controlled within an appropriate range, so as to ensure good conductivity.

When two or more electrolytic salts are used, the electrolytic salts include at least one salt selected from a group consisting of monofluorophosphate, borate, oxalate, and fluorosulfonate. In some embodiments, the electrolytic

salt includes a salt selected from a group consisting of monofluorophosphate, oxalate, and fluorosulfonate. In some embodiments, the electrolytic salt includes a lithium salt. In some embodiments, based on a total weight of the electrolytic salt, a percentage of the salt selected from the group consisting of monofluorophosphate, borate, oxalate, and fluorosulfonate is greater than 0.01% or greater than 0.1%. In some embodiments, based on a total weight of the electrolytic salt, the percentage of the salt selected from the group consisting of monofluorophosphate, borate, oxalate, and fluorosulfonate is less than 20% or less than 10%. In some embodiments, the percentage of the salt selected from the group consisting of monofluorophosphate, borate, oxalate, and fluorosulfonate falls within a range defined by any two of the foregoing values.

In some embodiments, the electrolytic salt includes one or more substances selected from the group consisting of monofluorophosphate, borate, oxalate, and fluorosulfonate, and one or more salts different from the one or more substances. Instances of the other salt different from the salts in the group include lithium salts exemplified above, and in some embodiments, are $LiPF_6$, $LiN(FSO_2)(CF_3SO_2)$, $LiN(CF_3SO_2)_2$, $LiN(C_2F_5SO_2)_2$, lithium cyclic 1,2-perfluoroethane disulfonimide, lithium cyclic 1,3-perfluoropropane disulfonimide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$, and $LiPF_3(C_2F_5)_3$. In some embodiments, the other salt is $LiPF_6$.

In some embodiments, based on a total weight of the electrolytic salt, a percentage of the other salt is greater than 0.01% or greater than 0.1%. In some embodiments, based on a total weight of the electrolytic salt, the percentage of the other salt is less than 20%, less than 15%, or less than 10%. In some embodiments, the percentage of the other salt falls within a range defined by any two of the foregoing values. The other salt having the foregoing percentage helps balance the conductivity and viscosity of the electrolyte.

In the electrolyte, in addition to the foregoing solvent, additive, and electrolytic salt, additives such as a negative electrode film forming agent, a positive electrode protection agent, and an overcharge prevention agent may be included as necessary. For the additive, an additive typically used in non-aqueous electrolyte secondary batteries may be used, and instances thereof may include but are not limited to vinylidene carbonate, succinic anhydride, biphenyls, cyclohexylbenzene, 2,4-difluoroanisole, propane sulfonate, and propylene sulfonate. These additives may be used alone or in any combination. In addition, a percentage of these additives in the electrolyte is not particularly limited and may be set as appropriate to the types of the additives and the like. In some embodiments, based on a total weight of the electrolyte, the percentage of the additive is less than 5%, within a range of 0.01%-5%, or within a range of 0.2%-5%.

**[Separator]**

To prevent short circuit, a separator is typically provided between the positive electrode and the negative electrode. In this case, the electrolyte of this application typically permeates the separator for use.

The material and shape of the separator are not particularly limited, provided that the separator does not significantly impair the effects of this application. The separator may be a resin, glass fiber, inorganic substance, or the like that is formed of a material stable to the electrolyte of this application. In some embodiments, the separator includes a porous sheet or non-woven fabric-like substance having an excellent fluid retention property, or the like. Instances of the material of the resin or glass fiber separator may include but are not limited to polyolefin, aromatic polyamide, polytetrafluoroethylene, polyethersulfone, and glass filter. In some embodiments, the material of the separator is glass filter. In some embodiments, the polyolefin is polyethylene or polypropylene. In some embodiments, the polyolefin is polypropylene. The material of the separator may be used alone or in any combination.

The separator may alternatively be a material formed by laminating the foregoing materials, and instances thereof include but are not limited to a three-layer separator formed by laminating polypropylene, polyethylene, and polypropylene in order.

Instances of the material of the inorganic substance may include but are not limited to oxides such as aluminum oxide and silicon dioxide, nitrides such as aluminum nitride and silicon nitride, and sulfates (for example, barium sulfate and calcium sulfate). The form of the inorganic substance may include but is not limited to a granular or fibrous form.

The form of the separator may be a thin-film form, and instances thereof include but are not limited to non-woven fabric, woven fabric, and a microporous film. In the thin-film form, the separator has a pore diameter of 0.01 $\mu m$ to 1 $\mu m$ and a thickness of 5 $\mu m$ to 50 $\mu m$. In addition to the standalone thin-film-like separator, the following separator may alternatively be used: a separator that is obtained by using a resin-based binder to form a composite porous layer containing inorganic particles on the surface of the positive electrode and/or the negative electrode, for example, a separator that is obtained by using fluororesin as a binder to form a porous layer on two surfaces of the positive electrode with alumina particles of which 90% have a particle size less than 1 $\mu m$.

The thickness of the separator is random. In some embodiments, the thickness of the separator is greater than 1 $\mu m$, greater than 5 $\mu m$, or greater than 8 $\mu m$. In some embodiments, the thickness of the separator is less than 50 $\mu m$, less than 40 $\mu m$, or less than 30 $\mu m$. In some embodiments, the thickness of the separator falls within a range defined by any two of the foregoing values. When the thickness of the separator falls within the foregoing range, insulation performance and mechanical strength can be guaranteed, and the rate performance and energy density of the electrochemical apparatus can be guaranteed.

When a porous material such as a porous sheet or non-woven fabric is used as the separator, the porosity of the separator is random. In some embodiments, the porosity of the separator is greater than 20%, greater than 35%, or greater than 45%. In some embodiments, the porosity of the separator is less than 90%, less than 85%, or less than 75%. In some embodiments, the porosity of the separator falls within a range defined by any two of the foregoing values. When the porosity of the separator falls within the foregoing range, insulation performance and mechanical strength can be guaranteed and sheet resistance can be suppressed, so that the electrochemical apparatus has good rate performance.

The average pore diameter of the separator is also random. In some embodiments, the average pore diameter of the separator is less than 0.5 μm or less than 0.2 μm. In some embodiments, the average pore diameter of the separator is greater than 0.05 μm. In some embodiments, the average pore diameter of the separator falls within a range defined by any two of the foregoing values. If the average pore diameter of the separator exceeds the foregoing range, a short circuit is prone to occur. When the average pore diameter of the separator falls within the foregoing range, sheet resistance can be suppressed while short circuit is prevented, so that the electrochemical apparatus has good rate performance.

**[Components of the electrochemical apparatus]**

The components of the electrochemical apparatus include an electrode assembly, a collector structure, an outer packing case, and a protective element.

Electrode assembly

The electrode assembly may be any one of a laminated structure in which the positive electrode and the negative electrode are laminated with the separator interposed therebetween, and a structure in which the positive electrode and the negative electrode are wound in a swirl shape with the separator interposed therebetween. In some embodiments, a mass percentage of the electrode assembly (occupancy of the electrode assembly) in the internal volume of the battery is greater than 40% or greater than 50%. In some embodiments, the occupancy of the electrode assembly is less than 90% or less than 80%. In some embodiments, the occupancy of the electrode assembly falls within a range defined by any two of the foregoing values. When the occupancy of the electrode assembly falls within the foregoing range, the capacity of the electrochemical apparatus can be guaranteed, degradation of repeated charge/discharge performance and high temperature storage property caused by an increasing internal pressure can be suppressed, and thereby action of a gas release valve can be prevented.

Collector structure

The collector structure is not particularly limited. In some embodiments, the collector structure is a structure that helps reduce the resistance of wiring portions and bonding portions. When the electrode assembly is the foregoing laminated structure, a structure in which metal core portions of the electrode layers are bundled and welded to terminals is suitable for use. An increase in an electrode area causes a higher internal resistance; therefore, it is also acceptable that two or more terminals are provided in the electrode to decrease the resistance. When the electrode assembly has the foregoing winding structure, two or more lead structures are provided at each of the positive electrode and the negative electrode, and are bundled at the terminals, so as to reduce the internal resistance.

Outer packing case

The material of the outer packing case is not particularly limited, provided that the material is a substance stable to the electrolyte in use. The outer packing case may use but is not limited to a nickel-plated steel plate, stainless steel, metals such as aluminum, aluminum alloy, or magnesium alloy, or laminated films of resin and aluminum foil. In some embodiments, the outer packing case is made of metal including aluminum or aluminum alloy or is made of a laminated film.

The metal outer packing case includes but is not limited to: a sealed packaging structure formed by depositing metal through laser welding, resistance welding, or ultrasonic welding; or a riveting structure formed by using the foregoing metal or the like with a resin pad disposed therebetween. The outer packing case using the laminated film includes but is not limited to a sealed packaging structure formed by thermally adhering resin layers. To improve the sealing property, a resin different from the resin used in the laminated film may be sandwiched between the resin layers. When the sealed structure is formed by thermally adhering the resin layers through current collecting terminals, a resin having a polar group or a modified resin into which a polar group is introduced may be used as the sandwiched resin in consideration of the bonding of metal and resin. In addition, the outer packing case may be in any random shape. For example, it may

have any one of a cylindrical shape, a square shape, a laminated form, a button form, a large form, or the like.

Protective element

The protection element may use a positive temperature coefficient (PTC), temperature fuse, or thermistor whose resistance increases during abnormal heat release or excessive current flows, or a valve (current cutoff valve) for cutting off a current flowing in a circuit by sharply increasing an internal pressure or an internal temperature of a battery during abnormal heat release, or the like. The protection element may be selected from elements that do not operate in conventional high-current use scenarios, or such design may be used that abnormal heat release or thermal runaway does not occur even without a protection element.

**[Application]**

The electrochemical apparatus according to this application includes any apparatus in which electrochemical reactions take place. Specific Instances of the apparatus include all kinds of primary batteries, secondary batteries, fuel batteries, solar batteries, or capacitors. Especially, the electrochemical apparatus is a lithium secondary battery, including a lithium metal secondary battery, a lithium-ion secondary battery, a lithium polymer secondary battery, or a lithium-ion polymer secondary battery.

In some embodiments of this application, a lithium-ion secondary battery is used as an example. A positive electrode plate, a separator, and a negative electrode plate are wound or stacked in sequence to form an electrode assembly, and the electrode assembly is then packaged, for example, in an aluminum-plastic film, followed by injection of an electrolyte, formation, and packaging, so that the lithium-ion secondary battery is prepared. Then, a performance test is performed on the prepared lithium-ion secondary battery. Persons skilled in the art should understand that the method for preparing the electrochemical apparatus (for example, the lithium-ion secondary battery) described above is only an embodiment. Without departing from the content disclosed in this application, other methods commonly used in the art may be used.

This application also provides an electronic apparatus including the electrochemical apparatus according to this application.

The electrochemical apparatus according to this application is not particularly limited to any purpose and may be used for any known electronic device in the prior art. In some embodiments, the electrochemical apparatus of this application may be used without limitation in notebook computers, pen-input computers, mobile computers, electronic book players, portable telephones, portable fax machines, portable copiers, portable printers, stereo headsets, video recorders, liquid crystal display televisions, portable cleaners, portable CD players, mini-disc players, transceivers, electronic notepads, calculators, storage cards, portable recorders, radios, backup power sources, motors, automobiles, motorcycles, power-assisted bicycles, bicycles, lighting appliances, toys, game consoles, clocks, electric tools, flash lamps, cameras, large household batteries, lithium-ion capacitors, and the like.

The following uses a lithium-ion battery as an instance and describes preparation of a lithium-ion battery with reference to specific examples. Persons skilled in the art should understand that the preparation method described in this application is only an instance and that all other suitable preparation methods fall within the scope of this application.

The following describes performance evaluation performed based on examples and comparative examples of the lithium-ion battery in this application.

Example 1

**I. Preparation of lithium-ion battery**

1. Preparation of negative electrode

A first conductive agent and a first binder were mixed according to their mass percentages with deionized water and stirred to uniformity to obtain a primer slurry. The primer slurry was applied onto a copper foil of 12 μm which then was dried at 50°C for 5 min. An active substance, a second binder, and a second conductive agent were mixed according to their mass percentages with deionized water and stirred to uniformity to obtain a negative electrode active substance slurry. The negative electrode active substance slurry was applied onto the primer layer. After steps of drying, cold pressing, cutting, and tab welding, a negative electrode was obtained. The negative electrode was set according to the conditions of the following examples and comparative examples to have corresponding compositions and parameters.

2. Preparation of positive electrode

A positive electrode material lithium cobalt oxide, a conductive material (Super-P), and polyvinylidene fluoride (PVDF) were mixed at a mass ratio of 95%:2%:3% with N-methylpyrrolidone (NMP) and stirred to uniformity to obtain a positive electrode slurry. The positive electrode slurry was applied onto an aluminum foil of 12 μm, and after steps of drying, cold pressing, cutting, and tab welding, a positive electrode was obtained.

3. Preparation of electrolyte

In a dry argon environment, EC, PC, PP, and DEC (at a weight ratio of 1:1:1:1) were mixed, and LiPF6 was added. The mixture was made even to obtain a base electrolyte, where the concentration of LiPF6 was 1.15 mol/L.
The compound represented by the above formula 1 was added into the base electrolyte according to the mass percentages to study the influence of the content relationship of the compound on the performance of the lithium-ion batteries.

4. Preparation of separator

A polyethylene (PE) porous polymer film was used as a separator.

5. Preparation of lithium-ion battery

The obtained positive electrode, separator, and negative electrode were wound in order and placed in an outer packing foil, leaving a liquid injection hole. The electrolyte was injected from the liquid injection hole which was then sealed. Then, formation and grading were performed to obtain a lithium-ion battery.
In examples 2 to 6, the methods for preparing the positive electrode, the electrolyte, the separator, and the lithium-ion battery were all the same as those in example 1, and examples 2 to 6 differ from example 1 only in the composition of the primer layer in the negative electrode plate.
In comparative example 1, the methods for preparing the positive electrode, the electrolyte, the separator, and the lithium-ion battery were all the same as those in examples 1 to 6, and comparative example 1 differs from examples 1 to 6 only in that the negative electrode in comparative example 1 has no primer layer.
In examples 7 to 9, the methods for preparing the positive electrode, the electrolyte, the separator, and the lithium-ion battery were all the same as those in example 1, and examples 2 to 6 differ from example 1 only in the composition of the primer layer in the negative electrode plate and the composition of the negative electrode active substance layer.
In comparative example 2, the methods for preparing the positive electrode, the electrolyte, the separator, and the lithium-ion battery were all the same as those in examples 7 to 9, and comparative example 2 differs from examples 7 to 9 only in that the negative electrode in comparative example 2 has no primer layer.
Specific compositions of the negative electrode in examples 1 to 9 and comparative examples 1 and 2 are shown in the following Table 1.
Methods for measuring various performance parameters in examples and comparative examples are as follows.

**II. Test method**

1. Adhesion test method

(1) A dried electrode plate was taken and a sample with a width of 30 mm and a length of 100-160 mm long was obtained by using a blade;
(2) a special double-sided adhesive with a width of 20 mm and a length of 90 mm-150 mm long was pasted to a steel plate;
(3) the resulting electrode plate sample in step (1) was pasted to the double-sided adhesive, with a test surface facing downward;
(4) a paper tape with a width equal to that of the electrode plate sample and a length of 80 mm-200 mm greater than that of the sample was inserted below the electrode plate and fastened by using a wrinkle stipple; and
(5) a Sunstest tensile machine was powered on, the indicator light was on, and a limit block is adjusted to a proper position for testing.

2. Sheet resistance test method

(1) The sheet resistance test was performed with an IEST device, a sheet resistance meter;
(2) the power supply of the device was maintained at 220 V, and the air pressure was greater than 0.7 MPa;
(3) a cut electrode plate (60 mm × 80 mm) was placed flat on a sample stage;
(4) then the sample stage was placed into the device test chamber for testing; and
(5) during the whole test process, the test air pressure was set to "0".

3. Cycling stability test method

At 25°C, the lithium-ion battery was charged to 4.45 V at a constant current of 1C, then charged to a current of 0.05C at a constant voltage of 4.45 V, and then discharged to 3.0 V at a constant current of 1C. This was the first cycle. The lithium-ion battery experienced such cycles under the foregoing conditions until the after-cycling capacity retention rate was 80%, and the number of cycles was recorded. "1C" refers to a current at which a lithium-ion battery is fully discharged in one hour.

The after-cycling capacity retention rate of the lithium-ion battery was calculated by using the following equation:

After-cycling capacity retention rate = (discharge capacity corresponding to the number of cycles/discharge capacity of the first cycle) × 100%.

4. Deformation test method

At 25°C, the lithium-ion battery was charged to 4.45 V at a constant current of 1C, then charged to a current of 0.05C at a constant voltage of 4.45 V, and then discharged to 3.0 V at a constant current of 1C. This was the first cycle. The lithium-ion battery experienced 500 such cycles under the foregoing conditions. "1C" refers to a current at which a lithium-ion battery is fully discharged in one hour.

After cycling, the battery was disassembled, and the negative electrode plate was taken out to observe whether the membrane was decarburized, for which decarburization indicated deformation and non-decarburization indicated non-deformation.

5. Porosity test method

A mercury intrusion porosimeter was used to test the porosity of the electrode plate, and specific operations were as follows:
An electrode plate with one side surface entirely coated with the membrane was used as a sample.

The density and porosity of the sample were estimated, and an appropriate dilatometer was selected.

The sample was baked in the oven for 2 h to remove moisture. The sample was weighed before analysis.

The sample was put into the dilatometer, sealed, and weighed. This was a total weight of the sample and the dilatometer.

The dilatometer was put into a low-pressure station, and low-pressure analysis was performed after low-pressure files were edited.

After the low-pressure analysis, the dilatometer was taken out and weighed. This was a total weight of the sample, the dilatometer, and mercury.

The dilatometer was put into a high-pressure station. It should be noted that the dilatometer was fixed before the high-pressure head was screwed in. The high-pressure head was screwed to the bottom and drive out bubbles.

The high-pressure analysis was started, and the drain valve was loosened or tightened as prompted.

After the high-pressure analysis, the dilatometer was removed and cleaned, and the test was finished.

At this time, the porosity X of the electrode plate was measured.

The method of converting the porosity X of the electrode plate to the porosity V of the membrane is as follows.

10 spots were randomly selected on the surface of the electrode plate to measure the average thickness H of the electrode plate.

The membrane on the surface of the electrode plate was washed off with an organic solvent, and 10 spots were randomly selected on the surface of the current collector to measure the average thickness h of the current collector.

Porosity V of the membrane =porosity X of the electrode plate × H/(H - h).

6. Rate performance test method

At 25°C, the lithium-ion battery was charged to 4.45 V at a constant current of 1C, then charged to a current of 0.05C at a constant voltage of 4.45 V, left standing for 5 min, and then discharged to the cut-off voltage of 3 V at a constant current of 0.2C. An actual discharge capacity at this time was recorded as D0. Then, the lithium-ion battery was charged to 4.45 V at a constant current of 1C, then charged to a current of 0.05C at a constant voltage of 4.45 V, and finally discharged to the cut-off voltage of 3 V at 2C. An actual discharge capacity at this moment was recorded as D1. Rate performance of lithium-ion battery =[(D1 - D0)/D0] × 100%.

7. Method for testing a average particle size of granular conductive agent

A sample was spread out on the test sample stage and photographed by a scanning electron microscope (SEM) or transmission electron microscope (TEM). Image analysis software was used to randomly select 10 particles of the granular conductive agent from SEM or TEM images, and respective areas of these granular conductive agents were calculated. Then, assuming that the granular conductive agents were spherical, respective particle sizes R (diameter) were calculated according to the following formula:

$$R = 2 \times (S/\pi)^{1/2}\text{, where S is the area of the granular conductive agent.}$$

where S is the area of the granular conductive agent.

Three SEM or TEM images were processed to calculate the particle sizes R of the above granular conductive agents, and the particle sizes of the 30 (10 × 3) obtained granular conductive agents were arithmetically averaged, so as to obtain the average particle size D of the described granular conductive agent.

8. Method for testing an average diameter of tubular conductive agent

A sample was spread out on the test sample stage and photographed by a scanning electron microscope (SEM) or transmission electron microscope (TEM). Image analysis software was used to randomly select 10 tubular conductive agents from SEM or TEM images, 5 spots were randomly selected from both sides of the tube wall of each tubular conductive photo, and a vertical line was made from each spot along the extension direction perpendicular to the tube wall where the spot was located, and an average distance to the other side of the tube wall was the tube diameter R of the tubular conductive agent.

The three SEM or TEM images were processed to calculate the tube diameter R of the above tubular conductive agent, and the particle sizes of the 30 (10 × 3) obtained tubular conductive agents were arithmetically averaged, so as to obtain the average tube diameter D of the described tubular conductive agent.

**III. Test results**

Table 1 lists the composition, adhesion, and sheet resistance of the negative electrode plates and performance of the corresponding lithium-ion batteries in examples 1 to 9 and comparative examples 1 and 2. The compacted density PD was set to 1.30 g/cm$^3$.

**Table 1**

<table>
<tr><th></th><th colspan="6">Active substance layer</th><th colspan="6">Primer layer</th><th rowspan="3">Adhesion (N/m)</th><th rowspan="3">Sheet resistance (mΩ)</th><th rowspan="3">Cycles</th><th rowspan="3">Is deformation present?</th></tr>
<tr><th></th><th colspan="2">Active substance</th><th colspan="3">Binder</th><th>Conductive agent</th><th colspan="2">Conductive agent</th><th colspan="2">Binder</th><th rowspan="2">Functional group</th><th rowspan="2">Thickness (μm)</th></tr>
<tr><th></th><th>Graphite</th><th>Si</th><th>PAA</th><th>CMC</th><th>SBR</th><th>CNT</th><th>CNT</th><th>SP</th><th>PAA</th><th>SBR</th></tr>
<tr><td>Example 1</td><td rowspan="7">97%</td><td rowspan="7">/</td><td rowspan="7">/</td><td rowspan="7">1%</td><td rowspan="7">2%</td><td rowspan="7">/</td><td></td><td>80%</td><td></td><td>20%</td><td>Carbon-carbon double bond</td><td>2</td><td>160</td><td>9</td><td>900</td><td>No</td></tr>
<tr><td>Example 2</td><td>10%</td><td></td><td>90%</td><td></td><td>Carboxyl group</td><td>0.1</td><td>600</td><td>22</td><td>690</td><td>No</td></tr>
<tr><td>Example 3</td><td></td><td>70%</td><td></td><td>30%</td><td>Carbon-carbon double bond</td><td>1</td><td>180</td><td>10</td><td>800</td><td>No</td></tr>
<tr><td>Example 4</td><td></td><td>50%</td><td></td><td>50%</td><td>Carbon-carbon double bond</td><td>1</td><td>220</td><td>15</td><td>1000</td><td>No</td></tr>
<tr><td>Example 5</td><td></td><td>20%</td><td></td><td>80%</td><td>Carbon-carbon double bond</td><td>0.3</td><td>230</td><td>20</td><td>600</td><td>No</td></tr>
<tr><td>Example 6</td><td>17%</td><td></td><td>83%</td><td></td><td>Carboxyl group</td><td>0.3</td><td>540</td><td>20</td><td>600</td><td>No</td></tr>
<tr><td>Comparative example 1</td><td>/</td><td>/</td><td>/</td><td>/</td><td>/</td><td>/</td><td>4</td><td>26</td><td>400</td><td>Yes</td></tr>
</table>

| | Active substance layer | | | | | | Primer layer | | | | | | Adhesion (N/m) | Sheet resistance (mΩ) | Cycles | Is deformation present? |
|---|---|---|---|---|---|---|---|---|---|---|---|---|---|---|---|---|
| | Active substance | | Binder | | | Conductive agent | Conductive agent | | Binder | | Functional group | Thickness (μm) | | | | |
| | Graphite | Si | PAA | CMC | SBR | CNT | CNT | SP | PAA | SBR | | | | | | |
| Example 7 | / | 88.8% | 10% | 1% | | 0.2% | 17% | | 83% | | Carboxyl group | 0.3 | 540 | 25 | 262 | No |
| Example 8 | | | | | | | 9% | | 91% | | Carboxyl group | 0.3 | 600 | 30 | 331 | No |
| Example 9 | | | | | | | 5% | | 95% | | Carboxyl group | 0.3 | 630 | 35 | 198 | No |
| Comparative example 2 | | 88.8% | | 1% | 10% | 0.2% | / | / | / | / | / | / | 8 | 65 | 80 | Yes |

It can be learned from the data in Table 1 that the adhesion in examples 1 to 9 with the primer layer is greatly increased as compared with comparative examples 1 to 2 without the primer layer, and correspondingly, the cycling and shape stability are also greatly improved. The reason lies in that, on one hand, presence of the primer layer is equivalent to reducing surface defects of the copper foil, enhancing riveting effect between the active material layer and the electrode plate, increasing the adhesion between the primer layer and the copper foil, thus increasing the adhesion between the entire membrane and the current collector, and reducing the risk of fall-off of the membrane. On the other hand, the presence of the primer layer can provide excellent buffering. When the negative electrode active substance swells due to intercalation of lithium ions, the primer layer prevents the swelling active substance from directly exerting force on the surface of the current collector. If a force is directly applied to the surface of the current collector, because the current collector is fixed in this direction and cannot be displaced, the active substance can only swell as a whole toward the outer surface of the membrane. When the negative electrode active substance shrinks due to deintercalation of lithium ions, all parts of the active substance tend to shrink synchronously/or the inner side with better electronic conductivity may shrink faster. This causes the active substance formerly in close contact with the surface of the current collector to be separated from the current collector, thus leading to fall-off of the membrane as well as the increased internal resistance and decreased cycling performance. Further, example 2 and examples 6 to 9 in which the binder of the primer layer has a polar functional group (carboxyl group) can significantly increase the adhesion between the membrane and the current collector, thus making the shape stability of the electrode plate more desirable. Especially, examples 7 to 9 in which the binder of the primer layer having a carboxyl group is used can ensure the adhesion of 500 N/m or more and can maintain excellent shape stability even for highly swelling Si-based active substances.

In addition, it can be learned from the comparison between Figure 3 and Figure 4 that the shape stability of the negative electrode plates provided in example 1 of this application is significantly improved compared with that of the negative electrode plates in comparative examples 1 and 2.

Examples 10 to 14 differ from example 2 only in the compacted density of the membrane of the negative electrode plate and the porosity of the membrane.

Table 2 lists the porosity corresponding to the membrane and the cycling performance and rate performance of the corresponding lithium-ion batteries with the same negative electrode membrane composition and different compacted densities in example 2 and examples 10 to 14.

**Table 2**

| | Compacted density (g/cm$^3$) | Porosity | Swelling rate | Cycles | Rate performance |
|---|---|---|---|---|---|
| Example 2 | 1.30 | 37.6% | 4.3% | 690 | 90% |
| Example 10 | 1.60 | 35.3% | 5% | 650 | 90% |
| Example 11 | 1.70 | 30.7% | 6% | 600 | 80% |
| Example 12 | 1.75 | 28.2% | 6.7% | 550 | 70% |
| Example 13 | 1.80 | 25.6% | 7% | 420 | 65% |
| Example 14 | 1.83 | 21.3% | 8% | 380 | 48% |

It can be learned from the data in Table 2 that example 2 and examples 10 to 13 with the compacted density of 1.30 g/cm$^3$ to 1.80 g/cm$^3$ have more excellent cycling stability and rate performance compared with example 14 with the compacted density of 1.83 g/cm$^3$. On one hand, the example with the compacted density of 1.30 g/cm$^3$ to 1.80 g/cm$^3$ provides an appropriate porosity, which can buffer the volume swelling and shrinkage caused by intercalation and deintercalation of lithium ions during cycling, and reduce the risk of film fall-off of the electrode plate. On the other hand, appropriate compacted density also reduces the pressure on the primer layer and ensures the presence of the primer layer between the active substance layer and the current collector, preventing the primer layer from being squeezed into the gap of the active substance layer due to excessive pressure, which otherwise leads to failure of implementing riveting and buffering of the primer layer. In addition, more desirable porosity can implement full contact with the electrolyte, which ensures that the battery has better rate performance.

Examples 15 to 23 differ from example 4 only in the proportional relationship between the particle size of the first conductive agent (SP) and the thickness of the primer layer for the primer layer of the negative electrode plate. Examples 24 to 32 differ from example 2 only in the proportional relationship between the tube diameter of the first conductive agent (CNT) and the thickness of the primer layer for the primer layer of the negative electrode plate.

Table 3 lists the influences of the relationship between the average particle size/average tube diameter of the first conductive agent and the thickness of the primer layer on the adhesion of the corresponding electrode plates, the sheet resistance, and the cycling stability of the corresponding lithium-ion batteries in examples 15 to 30, which have

the same composition as example 4 (SP) and example 2 (CNT).

**Table 3**

| | Average particle size D of SP (nm) | Average tube diameter D of CNT (nm) | Thickness H of primer layer (nm) | D/H | Adhesion (N/m) (between primer layer and current collector) | Sheet resistance (mΩ) | Cycles to capacity retention rate of 80% |
|---|---|---|---|---|---|---|---|
| Example 15 | 100 | / | 400 | 0.25 | 80 | 27 | 650 |
| Example 16 | 200 | / | 400 | 0.5 | 100 | 25 | 700 |
| Example 17 | 300 | / | 400 | 0.75 | 120 | 17 | 730 |
| Example 18 | 400 | / | 400 | 1 | 120 | 20 | 710 |
| Example 19 | 500 | / | 400 | 1.25 | 120 | 22 | 680 |
| Example 20 | 600 | / | 400 | 1.5 | 115 | 28 | 600 |
| Example 21 | 500 | / | 600 | 0.83 | 130 | 12 | 900 |
| Example 22 | 600 | / | 800 | 0.75 | 135 | 10 | 1000 |

| | Average particle size D of SP (nm) | Average tube diameter D of CNT (nm) | Thickness H of primer layer (nm) | D/H | Adhesion (N/m) (between primer layer and current collector) | Sheet resistance (mΩ) | Cycles to capacity retention rate of 80% |
|---|---|---|---|---|---|---|---|
| Example 23 | 800 | / | 1000 | 0.8 | 150 | 10 | 1000 |
| Example 24 | / | 100 | 400 | 0.25 | 100 | 24 | 680 |
| Example 25 | / | 100 | 200 | 0.5 | 90 | 22 | 700 |
| Example 26 | / | 200 | 400 | 0.5 | 110 | 17 | 780 |
| Example 27 | / | 300 | 400 | 0.75 | 120 | 17 | 780 |
| Example 28 | / | 400 | 600 | 0.67 | 140 | 12 | 900 |
| Example 29 | / | 500 | 600 | 0.83 | 160 | 10 | 900 |
| Example 30 | / | 600 | 600 | 1 | 160 | 12 | 850 |
| Example 31 | / | 750 | 600 | 1.25 | 140 | 19 | 720 |
| Example 32 | / | 900 | 600 | 1.5 | 125 | 25 | 660 |

It can be learned from the data in Table 3 that examples 16 to 19, examples 21 to 23, and examples 25 to 31 with D/H within the range of 0.5 to 1.25 have better sheet resistance and cycling stability compared with examples 15, 20, 24 and 32 with D/H outside the above range. On one hand, appropriate particle size (tube diameter)/thickness of the primer layer can avoid the accumulation of excessive small particles of the conductive agent in the primer layer, and avoid excessive interface resistance, thus leading to decreased sheet resistance and improved cycling stability. On the other hand, excessively large particle size (tube diameter)/thickness of the primer layer leads to uneven distribution of the conductive agent in the primer layer, thus leading to increased sheet resistance.

Examples 33 to 37 differ from example 2 only in that the electrolyte contains the S=O double bond-containing compound represented by formula 1, and the mass percentage y of the S=O double bond-containing compound represented by formula 1 in the electrolyte and the porosity V of the membrane satisfies a specified relationship.

Table 4 lists the influence of the relationship between the mass percentage y of the S=O double bond-containing compound represented by formula 1 in the electrolyte and the porosity V of the membrane on the electrochemical performance of the lithium-ion batteries in example 2 and examples 33 to 37.

**Table 4**

| | Mass percentage y of compound represented by formula 1-1 | Porosity V | y/V | Cycles | Rate performance |
|---|---|---|---|---|---|
| Example 2 | 0% | 37.6% | 0 | 690 | 90% |
| Example 33 | 0.5% | 37.6% | 0.013 | 720 | 92% |
| Example 34 | 1% | 37.6% | 0.026 | 730 | 93% |
| Example 35 | 2% | 37.6% | 0.053 | 750 | 95% |
| Example 36 | 2.5% | 37.6% | 0.066 | 750 | 93% |
| Example 37 | 3% | 37.6% | 0.080 | 700 | 91% |

It can be learned from the data in Table 4 that the relationship between the mass percentage of the S=O double bond-containing compound and the porosity of the membrane satisfies $0.01 \leq y/V \leq 0.07$, facilitating significantly improved cycling stability and rate performance. The reason lies in that a proper amount of the S=O double bond-containing compound represented by formula 1 can further form a complete and stable solid electrolyte film with high ionic conduction on the surface of the electrode plate, thus further increasing the ionic conductivity and improving the rate performance. However, when the S=O double bond-containing compound represented by formula 1 is excessive, that is, $y/V > 0.07$, the formed solid electrolyte film is too thick, which is not conducive to migration of lithium ions.

References to "embodiments", "some embodiments", "an embodiment", "another example", "examples", "specific examples", or "some examples" in this specification mean the inclusion of specific features, structures, materials, or characteristics described in at least one embodiment or example of this application in this embodiment or example. Therefore, descriptions in various places throughout this specification, such as "in some embodiments", "in the embodiments", "in an embodiment", "in another example", "in an example", "in a specific example", or "examples" do not necessarily refer to the same embodiment or example in this application. In addition, a specific feature, structure, material, or characteristic herein may be combined in any appropriate manner in one or more embodiments or examples.

Although illustrative embodiments have been demonstrated and described, a person skilled in the art should understand that the foregoing embodiments are not to be construed as limiting this application, and that the embodiments may be changed, replaced, and modified without departing from the spirit, principle, and scope of this application.

## Claims

1. An electrode plate, comprising:

    a current collector; and
    a membrane, wherein the membrane comprises a primer layer provided on a surface of the current collector and an active substance layer provided on a surface of the primer layer, and the primer layer comprises a first binder and a first conductive agent; wherein
    adhesion between the membrane and the current collector is greater than or equal to 20 N/m.

2. The electrode plate according to claim 1, wherein thickness of the primer layer is 100 nm-2 μm, and preferably 100 nm-1000 nm.

3. The electrode plate according to claim 1, wherein the electrode plate has at least one of the following characteristics:

    a. the adhesion between the membrane and the current collector is greater than or equal to 80 N/m;
    b. compacted density of the membrane is 1.30 $g/cm^3$-1.80 $g/cm^3$;
    c. porosity of the membrane is 20%-50%; or
    d. resistance of the membrane is 3 mS2-50 mΩ.

4. The electrode plate according to claim 1, wherein the electrode plate has at least one of the following characteristics:

    e. a mass percentage of the first binder in the primer layer is 20%-95%, and a mass percentage of the first conductive agent in the primer layer is 5%-80%;
    f. the first binder comprises at least one of these functional groups: carbon-carbon double bond, carboxyl group, carbonyl group, carbon-nitrogen single bond, hydroxyl group, ester group, acyl group, and aryl group;
    g. the first binder comprises at least one of styrene-butadiene rubber, polyacrylic acid, polyvinylpyrrolidone, or polyacrylamide; or
    h. the first conductive agent comprises at least one of conductive carbon black, Ketjen black, single-walled carbon nanotubes, or multi-walled carbon nanotubes.

5. The electrode plate according to claim 1, wherein a relationship between average particle size or average tube diameter D of the first conductive agent and thickness H of the primer layer satisfies the following:
    a ratio of D to H, D/H, is 0.25-1.5, and preferably 0.5-1.25.

6. The electrode plate according to claim 1, wherein
    the active substance layer comprises an active substance and a second binder, and has at least one of the following characteristics:

i. the active substance layer comprises at least one of graphite-type material or silicon-based material, and the silicon-based material comprises at least one of silicon, silicon oxide, silicon-carbon composite, or silicon alloy; or
j. the active substance layer comprises the active substance with a mass percentage of 80%-99%, the second binder with a mass percentage of 0.8%-20%, and a second conductive agent with a mass percentage of 0-5%.

**7.** An electrochemical apparatus, comprising:

a positive electrode plate;
a negative electrode plate; and
a separator disposed between the positive electrode plate and the negative electrode plate;
wherein the negative electrode plate is the electrode plate according to any one of claims 1 to 6.

**8.** The electrochemical apparatus according to claim 7, wherein the electrochemical apparatus comprises an electrolyte, and the electrolyte comprises an S=O double bond-containing compound.

**9.** The electrochemical apparatus according to claim 8, wherein the electrochemical apparatus has at least one of the following characteristics:

k. the S=O double bond-containing compound comprises at least one of cyclic sulfate, linear sulfate, linear sulfonate, cyclic sulfonate, linear sulfite, or cyclic sulfite; or
l. the S=O double bond-containing compound comprises at least one of compounds represented by formula 1:

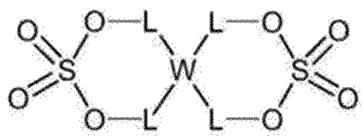 formula 1

wherein W is selected from

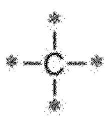, 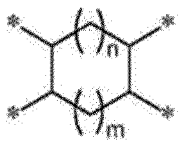, 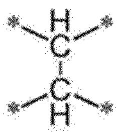, or 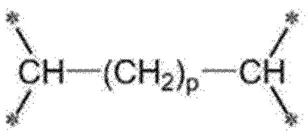;

L is selected from single bond or methylene group;
m is an integer between 1 and 4;
n is an integer between 0 and 2; and
p is an integer between 0 and 6.

**10.** The electrochemical apparatus according to claim 9, wherein a relationship between a mass percentage y of the S=O double bond-containing compound in the electrolyte and porosity V of the membrane satisfies $0.01 \leq y/V \leq 0.07$.

**11.** An electronic device, comprising the electrochemical apparatus according to any one of claims 7 to 10.

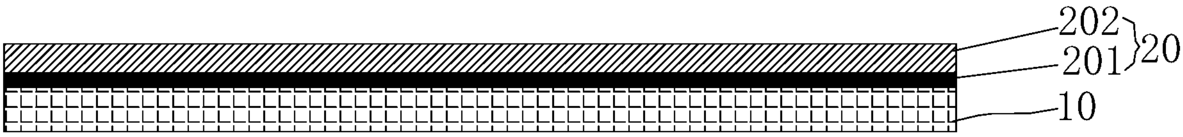


FIG. 1

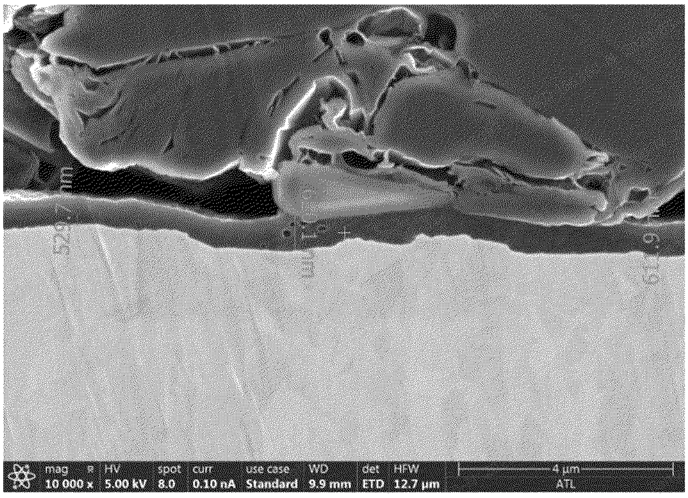

FIG. 2

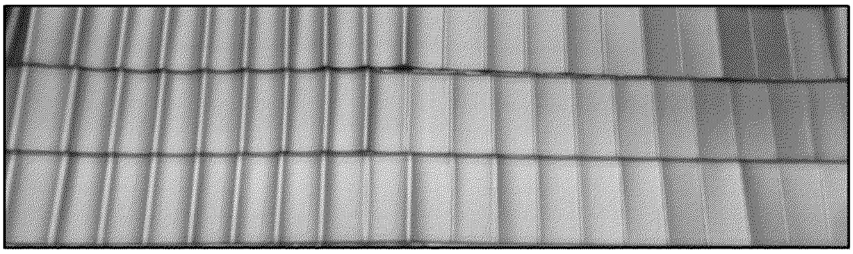

FIG. 3

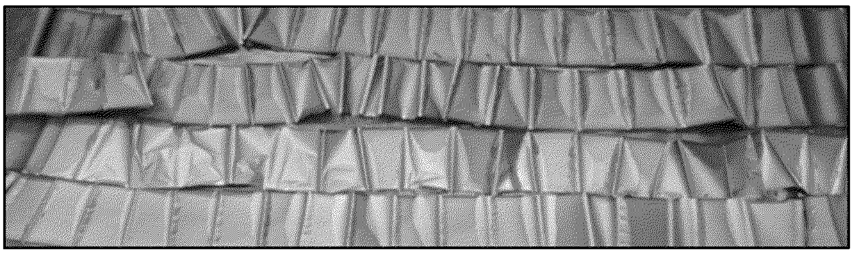

FIG. 4

**INTERNATIONAL SEARCH REPORT**

International application No.
**PCT/CN2021/123330**

**A. CLASSIFICATION OF SUBJECT MATTER**

H01M 4/13(2010.01)i; H01M 4/139(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, WPI, EPODOC, CNKI: 极片, 集流体, 电极, 涂层, 粘结, 粘合, anode, collector, electrode, binder, coating, adhesive

**C. DOCUMENTS CONSIDERED TO BE RELEVANT**

| Category* | Citation of document, with indication, where appropriate, of the relevant passages | Relevant to claim No. |
|---|---|---|
| X | CN 111710832 A (JIANGSU ZHUOGAO NEW MATERIAL TECHNOLOGY CO., LTD.) 25 September 2020 (2020-09-25) description paragraphs 0004-0151 | 1-7, 11 |
| Y | CN 111710832 A (JIANGSU ZHUOGAO NEW MATERIAL TECHNOLOGY CO., LTD.) 25 September 2020 (2020-09-25) description paragraphs 0004-0151 | 3, 8-10 |
| Y | CN 110265625 A (NINGDE CONTEMPORARY AMPEREX TECHNOLOGY CO., LTD.) 20 September 2019 (2019-09-20) description paragraphs 0015-0088 | 3, 8-10 |
| PX | CN 112151753 A (NINGDE AMPEREX TECHNOLOGY LTD.) 29 December 2020 (2020-12-29) claims 1-11 | 1-11 |
| A | JP 2016076317 A (HITACHI CHEM. CO., LTD.) 12 May 2016 (2016-05-12) entire document | 1-11 |
| A | CN 107482222 A (SHENZHEN BAK BATTERY CO., LTD.) 15 December 2017 (2017-12-15) entire document | 1-11 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **16 December 2021** | **14 January 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2021/123330**

| Patent document cited in search report | | | Publication date (day/month/year) | Patent family member(s) | | | Publication date (day/month/year) |
|---|---|---|---|---|---|---|---|
| CN | 111710832 | A | 25 September 2020 | None | | | |
| CN | 110265625 | A | 20 September 2019 | EP | 3651245 | A1 | 13 May 2020 |
| | | | | US | 2020152964 | A1 | 14 May 2020 |
| | | | | WO | 2020098571 | A1 | 22 May 2020 |
| | | | | CN | 110265625 | B | 04 December 2020 |
| CN | 112151753 | A | 29 December 2020 | None | | | |
| JP | 2016076317 | A | 12 May 2016 | None | | | |
| CN | 107482222 | A | 15 December 2017 | None | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202011104624X